# EUROPEAN PATENT APPLICATION

(11) **EP 4 312 296 A1**
(43) Date of publication of application: **31.01.2024**
(21) Application number: 22209588.7
(22) Date of filing: 25.11.2022
(51) Int. Cl.: H01M 10/0562, H01M 4/04, H01M 4/131, H01M 10/052, H01M 10/42, H01M 4/02, H01M 10/0565

(54) **SOLID ELECTROLYTE BASED ELECTRODE AND ELECTROCHEMICAL DEVICE**

(30) Priority: 29.07.2022 CN 202210909530
(71) Applicant: AESC Japan Ltd., Kanagawa, 2520012 (JP)
(72) Inventor: LYU, Wenbin, Jiangyin City, Wuxi City (CN); YU, Le, Jiangyin City, Wuxi City (CN)
(74) Representative: Becker, Eberhard

(57) **Abstract**

The invention provides an electrode sheet, the surface of the active material layer of the electrode sheet is provided with an intermediate layer and a lithium-supplementing layer, the intermediate layer includes a solid electrolyte, and the lithium-supplementing layer includes a lithium-containing compound that self-decomposes to produce lithium ions. The electrode sheet of the present invention may effectively suppress the heat generated in the lithium supplementing process, and overcome the defect of continuous consumption of active lithium ions in the continuous growth of the SEI layer. Therefore, the electrode sheet provided by the present invention has excellent lithium supplementation effect and electrochemical performance.

## Description

### BACKGROUND

### Technical Field

The disclosure belongs to the technical field of batteries, and relates to an electrode sheet and an electrochemical device.

### Description of Related Art

At present, the main reasons for attenuation of liquid batteries include: continuous growth of SEI layer, dissolution of transition metals, oxygen evolution of positive electrode material, electrolyte oxidation and lithium evolution of negative electrode, etc., and the loss of lithium ions may be counteracted by supplementing lithium, thereby avoiding attenuation of battery.

One of the known methods of supplementing lithium is to directly add lithium powder to the electrode sheet, or add lithium foil to the negative electrode. However, lithium metal is very sensitive to moisture and air, and lithium will generate a lot of heat in reaction with water, causing the local temperature of the electrode to be too high and resulting in failure of the electrode. The failure makes it impossible to form a good SEI during the lithium supplementing process, and on the other hand causes attenuation in the later cycle of the battery. Another method of supplementing lithium is a short-circuit method. However, such method of supplementing lithium will cause the electrode sheet to generate excessive heat, and SEI will not be generated during the voltage reduction process, which will also affect the later cycle of the battery.

Therefore, it is necessary to provide an electrode sheet, which is able to make the lithium supplementing process slow and moderate, and does not generate a lot of heat during the lithium supplementing process, thereby avoiding the disadvantage that the SEI cannot grow well during the lithium supplementing process, and thus enabling the battery to have a high first efficiency and excellent cycle performance.

### SUMMARY

In order to achieve the purpose of the disclosure, the present disclosure adopts the following technical solutions.

A first aspect of the present disclosure provides an electrode sheet, and a surface of the electrode sheet is coated with an active material layer, and an intermediate layer and a lithium-supplementing layer are further provided on the surface of the active material layer.

The intermediate layer includes a solid electrolyte, and the lithium-supplementing layer includes a lithium-containing compound capable of self-decomposing to generate lithium ions.

In the present disclosure, the surface of the active layer of the electrode sheet is first set as an intermediate layer by adopting a solid electrolyte, and then a lithium-supplementing layer is arranged on the upper surface of the intermediate layer, so that the intermediate layer may be used as an artificial SEI layer. In this way, on the one hand, it is possible to avoid heat release caused by direct contact between the lithium-supplementing layer and the electrode sheet, which effectively inhibits heat from generating during the lithium supplementing process; on the other hand, the setting of the intermediate layer avoids a large amount of loss of active lithium caused by the continuous growth of the SEI layer in the electrode sheet, thereby effectively improving the effect of lithium supplementation. The lithium-supplementing layer of the present disclosure adopts a self-decomposing lithium compound, which is able to self-decompose to generate lithium ions to supplement lithium during the charging and discharging processes. By replacing lithium foil or lithium powder adopted in conventional lithium supplementation, it is possible to solve the problem that lithium metal is sensitive to moisture and air and releases heat when in contact with water. Therefore, the present disclosure is able to reduce the calorific value in the process of supplementing lithium, improve the first efficiency of supplementing lithium, and improve the cycle performance of the battery.

A second aspect of the present disclosure provides an electrochemical device including the electrode sheet as described in the first aspect.

Compared with the related art, the present disclosure has the following advantageous effects.

In the present disclosure, an intermediate layer is first arranged on the surface of the electrode sheet by a magnetron sputtering method, and then a lithium-supplementing layer is arranged on the intermediate layer by an evaporation method, thereby avoiding the exothermic phenomenon generated by the lithium-supplementing layer during the lithium-supplementing process. In this manner, it is possible to solve the problem of consumption of active lithium for the electrode sheet to generate SEI continuously, thereby achieving the ideal lithium supplementation effect, so that the prepared battery have improved electrochemical performance. By using the electrode sheet of the present disclosure, the lithium-supplementing layer is able to generate more active lithium ions, and less heat is generated during lithium supplementation, so that the temperature of the battery cell is also lower. Furthermore, the setting of the intermediate layer is able to avoid the oxidation process of the electrolyte in the later cycle, so that the lithium supplementation effect is enhanced when the electrode sheet is adopted, and the obtained battery has improved electrochemical performance such as first efficiency and cycle performance.

### DESCRIPTION OF THE EMBODIMENTS

The technical solutions of the present disclosure are further described below through specific embodiments. It should be understood by those skilled in the art that the embodiments are only for facilitating the understanding of the present disclosure, and should not be construed as a specific limitation of the present disclosure.

The disclosure provides an electrode sheet, the surface of which is coated with an active material layer, and the surface of the active material layer of the electrode sheet includes an intermediate layer and a lithium-supplementing layer that are stacked in sequence. The intermediate layer includes a solid electrolyte, so the lithium-supplementing layer includes a lithium-containing compound capable of self-decomposing to generate lithium ions.

Preferably, the solid electrolyte includes any one or a combination of at least two of LiPON (lithium phosphorus oxynitride), LATP (lithium titanium aluminum phosphate), LLZO (lithium lanthanum zirconium oxide) or LLTO (lithium lanthanum titanium oxide). Typical but non-limiting combinations include the combination of LiPON and LLTO, or the combination of LATP and LLZO, preferably LiPON.

Preferably, the solid electrolyte is doped with a transition metal element, specifically, the LiPON, LATP, LLZO or LLTO is independently doped with a transition metal element.

Preferably, the transition metal element includes any one or a combination of at least two of Ti, V, Cr or Mn. Typical but non-limiting combinations include a combination of Ti and V, or a combination of Cr and Mn, preferably LiPON doped with a transition metal element.

Preferably, the content of transition metal element is 5wt% to 15wt%, for example, the content of transition metal element may be 5wt%, 10wt% or 15wt%, but is not limited to the values listed in the above, and other unlisted values within the numerical range are also applicable.

Compared with other solid electrolytes of the artificial SEI film of the intermediate layer that need to prepared by means of electrochemical reaction or coating method, the solid electrolyte of the present disclosure adopts LiPON or doped LiPON, so it is possible to form a thin SEI film on the electrode sheet by magnetron sputtering, thereby reducing the internal resistance of the battery cell. Therefore, a more preferable approach is to adopt LiPON or doped LiPON.

The disclosure is also doped with a transition metal element on the basis of LiPON, which makes it possible to further improve the effect of supplementing lithium and improve the electron and ion conduction rates of the SEI layer.

Preferably, the lithium-containing compound includes any one or a combination of at least two of lithium nitride, lithium sulfide, lithium fluoride, lithium oxide, lithium peroxide or lithium thiosulfate. Typical but non-limiting combinations include a combination of lithium nitride and lithium sulfide, a combination of lithium fluoride and lithium oxide, or a combination of lithium oxide and lithium peroxide, preferably lithium nitride.

The lithium-containing compound adopted in the present disclosure is able to decompose to generate lithium ions and corresponding gases under the action of voltage during the charging and discharging processes of the battery. For example, lithium nitride will decompose to generate active lithium ions and nitrogen gas at a voltage of about 3.8V. The generated gas may be removed from the battery cell during a formation process, and lithium ions may be embedded in the electrode sheet and react with the electrolyte to form a new SEI layer, so as to achieve an ideal lithium supplementation effect. In addition, in the present disclosure, the lithium-containing compound capable of self-decomposing to generate lithium ions is preferably lithium nitride. Since the gas generated by the self-decomposition of lithium nitride is nitrogen, the gas will not react with other substances in the battery cell, so that the electrochemical performance of the battery cell will not be affected by the generation of gas.

Preferably, the thickness of the intermediate layer is 1 µm to 2 µm, such as 1 µm, 1.1 µm, 1.2 µm, 1.3 µm, 1.4 µm, 1.5 µm, 1.6 µm, 1.7 µm, 1.8 µm, 1.9 µm or 2 µm, but not limited to the values listed above, the same applies to other non-listed values within the numerical range.

When the thickness of the intermediate layer of the present disclosure falls within the above range, it may be ensured that the electrons are normally conducted on the premise that the thickness of the intermediate layer has a proper effect. If the thickness of the intermediate layer is too thick, the conduction of electrons will be affected, and if the thickness of the intermediate layer is too thin, the thickness will not achieve a corresponding effect.

Preferably, the thickness of the lithium-supplementing layer is 1 µm to 5 µm, for example, the thickness may be 1 µm, 1.5 µm, 2 µm, 2.5 µm, 3 µm, 3.5 µm, 4 µm, 4.5 µm or 5 µm, but not limited to the listed numerical values, the same applies to other non-listed values within the range.

When the thickness of the lithium-supplementing layer of the present disclosure falls within the above range, the lithium-supplementing layer may effectively supplement lithium without affecting the internal resistance of the battery. If the thickness of the lithium-supplementing layer is too thick, the internal resistance of the battery will be increased, and if the thickness of the lithium-supplementing layer is too thin, the lithium supplementation effect will not be achieved.

Preferably, the intermediate layer is obtained by a magnetron sputtering method.

The disclosure adopts the magnetron sputtering method to prepare the intermediate layer, so as to precisely control the thickness of the layer, and the prepared intermediate layer has higher uniformity, compactness and purity.

Preferably, the lithium-supplementing layer is obtained by an evaporation method.

The disclosure adopts the evaporation method to prepare the lithium-supplementing layer. Compared with the conventional coating method, the evaporation method is able to ensure the stability of the lithium-supplementing layer, and avoid the defects of degraded stability or deterioration of self-decomposing material in the lithium-supplementing layer undergoing the homogenization process or coating process for a long time in other conventional methods.

Preferably, the active material layer includes a positive active material or a negative active material, preferably a positive active material.

The electrode sheet of the present disclosure has the effect of supplementing lithium no matter as a positive electrode sheet or a negative electrode sheet, especially when used as a positive electrode sheet, the problem of cracking of the intermediate layer does not occur, and the electrode sheet includes copper foil and negative electrode active layer coated on both sides of the copper foil, and the thickness of the negative electrode active layer is 60 µm, including a silicon carbon material, Super-P and CMC in a mass ratio of 94:3.5:2.5. The above descriptions for the positive electrode sheet and the negative electrode sheet are only for describing the technical solution of the present disclosure more completely, and should not be regarded as a specific limitation to the present disclosure.

### Example 1

This embodiment provides an electrode sheet, the electrode sheet adopts a positive electrode sheet, and an intermediate layer and a lithium-supplementing layer are sequentially stacked on both sides of the positive electrode active layer. The intermediate layer is a LiPON layer, and the lithium-supplementing layer is a lithium nitride layer. The thickness of the intermediate layer is 2 µm, which is obtained by the magnetron sputtering method. The thickness of the lithium-supplementing layer is 1 µm, which is obtained by evaporation method.

The preparation method of electrode sheet includes the following steps.

Under vacuum conditions, a lithium phosphate target is adopted, and the mass flow controller controls the flow ratio of the incoming working gas nitrogen to argon to be 3:1. Under the working pressure of 5 × 10⁻²Pa, magnetron sputtering deposition was performed on the surface of the positive electrode sheet for 4 hours to obtain an intermediate layer of 2 µm, and then the lithium-supplementing layer was vapor-deposited on the surface of the intermediate layer by evaporation equipment to obtain the electrode sheet.

### Example 2

The electrode sheet of Example 2 adopts a positive electrode sheet, and an intermediate layer and a lithium-supplementing layer are sequentially stacked on both sides of the positive active layer, and the intermediate layer is a LiPON layer, and the lithium-supplementing layer is a lithium sulfide layer. The thickness of the intermediate layer is 1.5 µm and is obtained by electrolyte may be prevented from being oxidized in the later cycle of the cycle, so that the battery has a lower internal resistance and better cycle performance. In the meantime, the lithium-supplementing layer is more easily oxidized in the process of increasing the positive electrode voltage, so that the lithium-containing compound of the lithium-supplementing layer is decomposed more thoroughly and releases more active lithium ions. Accordingly, less heat is generated during the lithium supplementing process, making the temperature of the battery lower, which makes it possible to achieve higher first efficiency, lower internal resistance, and better cycle performance of the battery. Therefore, the preferred type of electrode sheet in the present disclosure is a positive electrode sheet, and the active material in the active material layer is a positive electrode active material.

Preferably, the positive electrode active material includes a high nickel material, and the negative electrode active material includes a high silicon material.

The preparation method of electrode sheet of the present disclosure is as follows.

In a vacuum environment, lithium salt is used as a target material, nitrogen and argon are introduced, and a coating film is deposited on the surface of the electrode sheet by magnetron sputtering to obtain an intermediate layer. Next, a lithium-supplementing layer is vapor-deposited on the surface of the intermediate layer using vapor deposition equipment to obtain the electrode sheet.

Preferably, the lithium salt includes lithium phosphate.

The present disclosure also provides an electrochemical device including the electrode sheet as described above.

In the following examples and comparative examples, the adopted positive electrode sheet includes aluminum foil and positive electrode active layers coated on both sides of the aluminum foil. The thickness of the positive active layer is 58 µm, including a high-nickel material, conductive carbon black and PVDF in a mass ratio of 95:3:2. The adopted negative magnetron sputtering. The thickness of the lithium-supplementing layer is 2.5 µm, which is obtained by evaporation method.

The preparation method of the electrode sheet of Example 2 includes the following steps.

Under vacuum conditions, a lithium phosphate target is adopted, and the mass flow controller controls the flow ratio of the incoming working gas nitrogen to argon to be 3:1. Under the working pressure of 5 × 10⁻²Pa, magnetron sputtering deposition was performed on the surface of the positive electrode sheet for 3 hours to obtain an intermediate layer of 1.5 µm, and then the lithium-supplementing layer was vapor-deposited on the surface of the intermediate layer by evaporation equipment to obtain the electrode sheet.

### Example 3

The electrode sheet of Example 3 adopts a positive electrode sheet, and an intermediate layer and a lithium-supplementing layer are sequentially stacked on both sides of the positive active layer, and the intermediate layer is a LiPON layer, and the lithium-supplementing layer is a lithium oxide layer. The thickness of the intermediate layer is 1 µm and is obtained by magnetron sputtering. The thickness of the lithium-supplementing layer is 5 µm, which is obtained by evaporation method.

The preparation method of the electrode sheet of Example 3 includes the following steps.

Under vacuum conditions, a lithium phosphate target is adopted, and the mass flow controller controls the flow ratio of the incoming working gas nitrogen to argon to be 3:1. Under the working pressure of 5 × 10⁻²Pa, magnetron sputtering deposition was performed on the surface of the positive electrode sheet for 2 hours to obtain an intermediate layer of 1 µm, and then the lithium-supplementing layer was vapor-deposited on the surface of the intermediate layer by evaporation equipment to obtain the electrode sheet.

The electrode sheets provided in Example 4 and Example 5 are shown in Table 2. The difference between Examples 4-5 and Example 1 is that the electrode sheet in Example 4 is a negative electrode sheet, and both sides are coated with a negative electrode active layer. In Example 5, intermediate layer and lithium-supplementing layer are all prepared on the surface of negative electrode sheet and positive electrode sheet, that is, except that the type of electrode sheet adopted is changed, other conditions are the same as in Example 1.

The electrode sheets provided in Examples 6 and 7 are shown in Table 3. Except for the change in the thickness of the intermediate layer, the rest of conditions are the same as those in Example 1.

The electrode sheets provided in Examples 8 and 9 are shown in Table 4. Except for the change in thickness of the lithium-supplementing layer, the rest of conditions are the same as those in Example 1.

The electrode sheet provided in Example 10 is shown in Table 5. Except for the change in composition of the intermediate layer, the rest of conditions are the same as in Example 1, and in the Ti-doped LiPON adopted in Example 10, the doping amount of Ti is 10wt%.

The electrode sheet provided in Example 11 is shown in Table 5, and the composition of the intermediate layer is changed to LATP. Since LATP cannot be obtained by magnetron sputtering but by slurry coating, an intermediate layer with a thickness of 2 µm cannot be obtained. The thickness of the intermediate layer obtained after coating is 5.5 µm, and the rest of conditions are the same as that of Example 1.

Compared with the Examples, artificial SEI and lithium-supplementing layer are not provided on the surface of the electrode sheet provided by the Comparative Example 1, and the electrode sheets provided by the Comparative Example 2 to the Comparative Example 4 are as shown in Table 6. Except for the change in composition of the surface of the electrode sheet, the rest of conditions are the same as that of Example 1. The surface of Comparative Example 4 is provided with an intermediate layer and a metal lithium layer, and the thickness of the metal lithium layer is the same as that of the lithium-supplementing layer described in Example 1, which is also obtained by evaporation.

The electrode sheet of the present disclosure adopts SEM-EDS to detect elements before assembling, and adopts XPS to detect relevant test peaks to prove that an intermediate layer and a lithium-supplementing layer exist on the surface of the electrode sheet. Taking the electrode sheet provided in Example 1 as an example, SEM-EDS is adopted to detect N and P elements, and XPS may be adopted to detect the relevant test peaks of P=O and N=O.

The electrode sheets provided by the above Examples 1 to 3, Examples 6 to 11 and Comparative Examples 1 to 4, the individual negative electrode sheets that are not provided with the intermediate layer and the lithium-supplementing layer, polyethylene separators, and 1mol/L of LiPF₆/EC+DMC+EMC (the volume ratio of EC, DMC and EMC is 1:1:1) electrolyte are assembled into batteries according to the general process of preparing lithium-ion batteries. Similarly, the electrode sheet provided in Example 4, an individual positive electrode sheet not provided with the intermediate layer and the lithium-supplementing layer, the above-mentioned separator and the electrolyte are assembled into a battery. The two electrode sheets provided in Example 5 and the above-mentioned separator and electrolyte are assembled into a battery.

In order to verify electrochemical properties of the batteries, the above assembled batteries are chemically formed and then tested for interfacial internal resistance, first Coulomb efficiency test, normal temperature cycle test and DCR test. The test conditions are as follows.
(1) 0.33C capacity calibration (1Ah): standing for 10min at 25°C, charging to 4.17V with 1/3C constant current, charging to 0.05C with 4.17V constant voltage, standing for 30min, discharging to 2.5V with 1/3C constant current, and repeating the above operations twice;
(2) Adjustment of state of charge to 50%: taking the last discharge capacity as C₀, which is the basis for all the following test capacities, standing for 30 minutes, charging at 1/3C constant current to (C₀×50%) Ah, and adjusting SOC to 50%;
(3) 4C DC DCR: standing for 1h, recording the static terminal voltage Vo, discharging for 30s with 4C, the recording condition is △t=0.1s, standing for 30min, and discharging to 2.5V with 1/3C;
(4) Repeat for 100 cycles: standing for 10 minutes, charging to 4.2V at 0.5C constant current, charging to 0.05C at 4.2V constant voltage, standing for 10 minutes, discharging to 2.5V at 1C, after repeating for 100 cycles from step (4), standing for 30min;
(5) EOL 1/3C capacity calibration: discharging to 2.5V at 1/3C, and the capacity and DCR are measured every 100 cycles;
(6) Standing for 30min, charging to 4.2V at 1/3C constant current, charging to 0.05C at 4.2V constant voltage, standing for 30min, discharging to 2.5V at 1/3C, repeating twice from step (6), taking C₁ as the last discharge capacity and the basis for the following DCR test capacity;
(7) Charging to (C₀×50%) Ah with 1/3C constant current, adjusting SOC to 50%; (8) 4C DC DCR: standing for 1h, recording the static terminal voltage Vo, discharging for 30s at 4C, the recording conditions are: △t=0.1s, standing for 30min, performing 1/3C capacity calibration every 100 cycles, performing DCR once, repeating the above steps, and repeating for 1000 cycles.

The test results are shown in the following tables.

**Table 1**

| | First efficiency (%) | Initial charging temperature of battery cell (°C) | DCR@500 weeks/DCR@1st (%) | Capacity retention @ 500 weeks (%) |
|---|---|---|---|---|
| Example 1 | 99.3 | 28.3 | 110.1 | 96.5 |
| Example 2 | 98.4 | 30.3 | 120.1 | 94.8 |
| Example 3 | 97.7 | 32.3 | 115.1 | 95.2 |

**Table 2**

| | Type of electrode sheet | First efficiency (%) | Initial charging temperature of battery cell (°C) | DCR@500 weeks/DCR@1st (%) | Capacity retention @ 500 weeks (%) |
|---|---|---|---|---|---|
| Example 1 | Positive electrode sheet | 99.3 | 28.3 | 110.1 | 96.5 |
| Example 4 | Negative electrode sheet | 95.2 | 30.5 | 120.7 | 91.2 |
| Example 5 | Positive electrode sheet+ negative electrode sheet | 91.2 | 33.2 | 153.8 | 90.2 |

**Table 3**

| | Thickness of intermediate layer (µm) | First efficiency (%) | Initial charging temperature of battery cell (°C) | DCR@500 weeks/DCR@1st (%) | Capacity retention @ 500 weeks (%) |
|---|---|---|---|---|---|
| Example 1 | 2 | 99.3 | 28.3 | 110.1 | 96.5 |
| Example 6 | 2.5 | 97.9 | 31.3 | 117.8 | 95.2 |
| Example 7 | 0.5 | 98.2 | 46.3 | 113.2 | 95.9 |

**Table 4**

| | Thickness of lithium-supplementing layer(µm) | First efficiency (%) | Initial charging temperature of battery cell (°C) | DCR@500 weeks/DCR@1st (%) | Capacity retention @ 500 weeks (%) |
|---|---|---|---|---|---|
| Example 1 | 1 | 99.3 | 28.3 | 110.1 | 96.5 |
| Example 8 | 5.5 | 98.9 | 52.3 | 116.0 | 95.1 |
| Example 9 | 0.5 | 97.1 | 32.3 | 115.9 | 94.9 |

**Table 5**

| | Composition of intermediate layer | First efficiency (%) | Initial charging temperature of battery cell (°C) | DCR@500 weeks/DCR@1st (%) | Capacity retention @ 500 weeks (%) |
|---|---|---|---|---|---|
| Example 1 | LiPON layer | 99.3 | 28.3 | 110.1 | 96.5 |
| Example 10 | Ti-doped LiPON layer | 99.7 | 27.8 | 109.2 | 96.7 |
| Example 11 | LATP layer | 90.2 | 21.8 | 128.2 | 86.7 |

**Table 6**

| | Composition of surface of electrode sheet | First efficiency (%) | Initial charging temperature of battery cell (°C) | DCR@500 weeks/DCR@1st (%) | Capacity retention @ 500 weeks (%) |
|---|---|---|---|---|---|
| Example 1 | LiPON layer + lithium nitride layer | 99.3 | 28.3 | 110.1 | 96.5 |
| Comparative Example 1 | - | 89.6 | 25.3 | 120.1 | 89.7 |
| Comparative Example 2 | LiPON layer | 89.2 | 26.7 | 137.3 | 91.6 |
| Comparative Example 3 | Lithium nitride Layer | 93.2 | 45.8 | 175.2 | 86.2 |
| Comparative Example 4 | LiPON layer + metal lithium layer | 96.2 | 25.7 | 122.6 | 85.8 |

The following results may be obtained from the above table.
(1) It can be seen from Examples 1 to 11 and Comparative Examples 1 to 4 that the intermediate layer is first set by magnetron sputtering, and then the lithium-supplementing layer is set by the evaporation method, so that it is possible to prevent the lithium-supplementing layer from releasing heat during the lithium-supplementing process and avoid the growth problem of SEI. In this manner, a better lithium supplementation effect may be achieved, and the prepared battery has excellent electrochemical performance. It can be seen from Example 1, Example 4 and Example 5 that a better lithium supplementation effect may be achieved by setting the intermediate layer and the lithium-supplementing layer on the positive electrode sheet, and the obtained battery has better electrochemical performance. When the intermediate layer and the lithium-supplementing layer are set on the negative electrode sheet, the intermediate layer is more likely to be cracked with the expansion of the negative electrode during the cycle process, and it is impossible to achieve a better lithium-supplementing effect. The intermediate layer only set on the surface of the positive electrode sheet has high stability, and the lithium-supplementing layer is more easily oxidized, so that the lithium-containing compound of the lithium-supplementing layer is decomposed more thoroughly. Therefore, the heat generated during the lithium-supplementing process is lower, making the performance of the battery excellent.
(2) From Example 1, Example 6 and Example 7, it can be seen that when the thickness of the intermediate layer is too thick, the conduction rate of electrons will be reduced, and if the thickness of the intermediate layer is too thin, the effect of the intermediate layer is poor. Example 1, Example 8, Example 9 show that when the thickness of the lithium-supplementing layer is too thick, the internal resistance of the battery will increase, which affects the electrochemical performance of the battery. When the thickness of the lithium-supplementing layer is too thin, the lithium supplementation effect is poor. Therefore, the combination of the lithium-supplementing layer and the intermediate layer with a reasonable thickness can make the battery have good lithium supplementation effect and excellent performance. As can be seen from Example 1, Example 10 and Example 11, doping transition metal elements in LiPON may further improve the ion and electron transfer rate of the intermediate layer, and further improve the lithium supplementation effect and battery performance. In the case where other solid electrolytes are adopted, because other solid electrolytes cannot be combined with the magnetron sputtering method to prepare a thinner artificial SEI film, when the LATP layer is used as the intermediate layer in Example 11, the thickness of the prepared layer is too thick, which significantly increases the internal resistance of the battery cell, and increases the transmission distance of lithium ions, reduces the transfer rate of lithium ions, and reduces the performance of the battery accordingly.
(3) It can be seen from Example 1 and Comparative Examples 1 to 3 that Comparative Example 1 does not have an intermediate layer and a lithium-supplementing layer, and the capacity retention rates at the first efficiency and after 500 weeks are significantly lower than that of Example 1. The above shows that Example 1 has a better lithium supplementation effect than Comparative Example 1, and is able to overcome the defects found in the conventional lithium supplementation process. Compared with Comparative Example 2 and Comparative Example 3, Example 1 also shows better performance in various aspects such as first efficiency and capacity retention rate. The above can also prove that the matching relationship between the intermediate layer and the lithium-supplementing layer of the electrode sheet of the present disclosure is able to improve the lithium supplementation effect and the electrochemical performance of the battery through synergy. It can be seen from Example 1 and Comparative Example 4 that the lithium-supplementing layer in Comparative Example 4 adopts elemental lithium metal. In that case, although lithium may also be supplemented, but the capacity retention rate after 500 weeks is significantly lower than that of Example 1. It is considered that because the stability of lithium metal is poor, and the heat that is generated is more than that of the lithium-supplementing layer of the present disclosure, so the lithium supplementation effect is reduced, the function achieved by the intermediate layer is decreased, and a better synergistic effect cannot be achieved. Therefore, the obtained battery performance is degraded.

To sum up, the present disclosure provides an electrode sheet and application thereof. The electrode sheet does not generate a large amount of heat in the process of supplementing lithium, and the process of supplementing lithium is slow and moderate, thereby avoiding the disadvantage that the SEI cannot grow well during the lithium supplementing process, and thus enabling the battery to have excellent performance.

## Claims

1. An electrode sheet, a surface of the electrode sheet is coated with an active material layer, **characterized in that**, an intermediate layer and a lithium-supplementing layer are provided on a surface of the active material layer,
the intermediate layer comprises a solid electrolyte, and the lithium-supplementing layer comprises a lithium-containing compound capable of self-decomposing to generate lithium ions.

2. The electrode sheet according to claim 1, wherein the solid electrolyte is selected from any one or more of LiPON, LATP, LLZO or LLTO.

3. The electrode sheet according to claim 2, wherein the solid electrolyte is doped with a transition metal element.

4. The electrode sheet according to claim 1 or 2, wherein the lithium-containing compound is selected from any one or more of lithium nitride, lithium sulfide, lithium fluoride, lithium oxide, lithium peroxide or lithium thiosulfate.

5. The electrode sheet according to claim 1 or 2, wherein a thickness of the intermediate layer is 1 µm to 2 µm.

6. The electrode sheet according to claim 1 or 2, wherein a thickness of the lithium-supplementing layer is 1 µm to 5 µm,

7. The electrode sheet according to claim 5, wherein the intermediate layer is obtained by performing a magnetron sputtering method.

8. The electrode sheet according to claim 6, wherein the lithium-supplementing layer is obtained by performing an evaporation method.

9. The electrode sheet according to claim 1, wherein the active material layer comprises a positive electrode active material.

10. An electrochemical device, comprising the electrode sheet according to any one of claims 1-9.
